# EUROPEAN PATENT APPLICATION

(11) **EP 4 089 592 A1**
(43) Date of publication of application: **16.11.2022**
(21) Application number: 22172474.3
(22) Date of filing: 10.05.2022
(51) Int. Cl.: G06N 5/02, G06V 10/98, G06V 20/70, G06F 11/34

(54) **METHOD FOR DETERMINING ANNOTATION CAPABILITY INFORMATION, RELATED APPARATUS AND COMPUTER PROGRAM PRODUCT**

(30) Priority: 17.06.2021 CN 202110670173
(71) Applicant: Beijing Baidu Netcom Science and Technology Co., Ltd., Beijing 100085 (CN)
(72) Inventor: YANG, Xue, Beijing, 100085 (CN)
(74) Representative: Richly & Ritschel Patentanwälte PartG mbB

(57) **Abstract**

A method and apparatus for determining annotation capability information, an electronic device, a computer readable storage medium and a computer program product are provided. An implementation of the method includes: determining a trial annotation object according to an annotation demand for a to-be-annotated task; determining trial annotation data, according to the annotation demand and a preset trial annotation requirement; and determining a trial annotation duration according to an attribute of the trial annotation object, and determining annotation capability information of the trial annotation object according to an annotation result of the trial annotation object annotating the trial annotation data within the trial annotation duration.

## Description

### TECHNICAL FIELD

The present disclosure relates to the field of data processing technology, particularly to the fields of technologies such as data annotation, annotation result analysis and annotation task assignment, and more particularly to a method and apparatus for determining annotation capability information, an electronic device, a computer readable storage medium and a computer program product.

### BACKGROUND

With the development and application of artificial intelligence in various aspects, the demands for a data annotation conforming to requirements have been unprecedentedly increased. A data annotation is a process of providing structured data for artificial intelligence algorithms. The annotation process is generally completed by an annotator by means of data crowdsourcing or agency. The practicability of an automatic annotation model nowadays cannot yet meet requirements.

### SUMMARY

Embodiments of the present disclosure propose a method and apparatus for determining annotation capability information, an electronic device, a computer readable storage medium and a computer program product.

According to a first aspect, some embodiments of the present disclosure provide a method for determining annotation capability information. The method includes: determining a trial annotation object according to an annotation demand for a to-be-annotated task; determining trial annotation data, according to the annotation demand and a preset trial annotation requirement; and determining a trial annotation duration according to an attribute of the trial annotation object, and determining annotation capability information of the trial annotation object according to an annotation result of the trial annotation object annotating the trial annotation data within the trial annotation duration.

According to a second aspect, some embodiments of the present disclosure provide an apparatus for determining annotation capability information. The apparatus includes: a trial annotation object determining unit, configured to determine a trial annotation object according to an annotation demand for a to-be-annotated task; a trial annotation data determining unit, configured to determine trial annotation data, according to the annotation demand and a preset trial annotation requirement; and a trial annotation duration and annotation capability information determining unit, configured to determine a trial annotation duration according to an attribute of the trial annotation object, and determine annotation capability information of the trial annotation object according to an annotation result of the trial annotation object annotating the trial annotation data within the trial annotation duration.

According to a third aspect, some embodiments of the present disclosure provide an electronic device. The electronic device includes: at least one processor; and a storage device, communicated with the at least one processor, where the storage device stores instructions thereon, and the instructions, when executed by a processor, cause the processor to perform the method for determining annotation capability information according to any one of the implementations in the first aspect.

According to a fourth aspect, some embodiments of the present disclosure provide a non-transitory computer readable storage medium storing a computer program thereon, where the computer program, when executed by a processor, causes the processor to perform the method for determining annotation capability information according to any one of the implementations in the first aspect.

According to a fifth aspect, some embodiments of the present disclosure provide a computer program product. The computer program product includes a computer program therein, where the computer program, when executed by a processor, cause the processor to implement the method for determining annotation capability information according to any one of the implementations in the first aspect.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

After reading detailed descriptions of non-limiting embodiments given with reference to the following accompanying drawings, other features, objectives and advantages of the present disclosure will be more apparent.
Fig. 1 illustrates an exemplary system architecture in which embodiments of the present disclosure may be applied;
Fig. 2 is a flowchart of a method for determining annotation capability information provided by an embodiment of the present disclosure;
Fig. 3 is a flowchart of another method for determining annotation capability information provided by an embodiment of the present disclosure;
Fig. 4 is a flowchart of a method for determining a trial annotation duration provided by an embodiment of the present disclosure;
Fig. 5 is a structure block diagram of an apparatus for determining annotation capability information provided by an embodiment of the present disclosure; and
Fig. 6 is a schematic structural diagram of an electronic device provided by an embodiment of the present disclosure and adapted to perform a method for determining annotation capability information.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description. It should be noted that the embodiments in the present disclosure and the features in the embodiments may be combined with each other on a non-conflict basis.

In the technical solution of the present disclosure, the acquisition, storage, application, etc. of the personal information of a user are all comply with the provisions of the relevant laws and regulations, necessary confidentiality measures are taken, and public order and good customs are not violated.

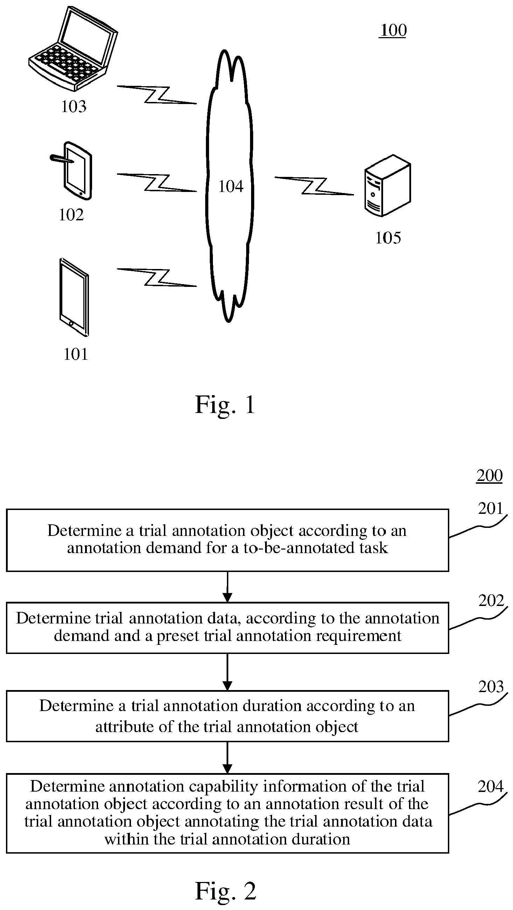

Fig. 1 illustrates an exemplary system architecture 100 in which embodiments of a method and apparatus for determining annotation capability information, an electronic device and a computer readable storage medium according to the present disclosure may be applied.

As shown in Fig. 1, the system architecture 100 may include terminal device(s) 101, 102, 103, a network 104 and a server 105. The network 104 serves as a medium providing a communication link between the terminal device(s) 101, 102, 103 and the server 105. The network 104 may include various types of connections, for example, wired or wireless communication links, or optical fiber cables.

A user may use the terminal device(s) 101, 102 and 103 to interact with the server 105 via the network 104, to receive or send a message, etc. On the terminal device(s) 101, 102, 103 and the server 105, various applications (e.g., an annotation capability information determination application, an annotated data transmission application, and a trial annotation data preparation application) for implementing an information communication between the terminal device(s) 101, 102, 103 and the server 105 may be installed.

The terminal devices 101, 102 and 103 and the server 105 may be hardware or software. When being the hardware, the terminal devices 101, 102 and 103 may be various electronic devices having a display screen, the electronic devices including, but not limited to, a smartphone, a tablet computer, a laptop portable computer, a desktop computer, and the like. When being the software, the terminal devices 101, 102 and 103 may be installed in the above listed electronic devices. The terminal devices 101, 102 and 103 may be implemented as a plurality of pieces of software or a plurality of software modules, or may be implemented as a single piece of software or a single software module, which will not be specifically limited here. When being the hardware, the server 105 may be implemented as a distributed server cluster composed of a plurality of servers, or may be implemented as a single server. When being the software, the server 105 may be implemented as a plurality of pieces of software or a plurality of software modules, or may be implemented as a single piece of software or a single software module, which will not be specifically limited here.

The server 105 may provide various services through various built-in applications. Taking an annotation capability information determination application providing a trial annotation and determining an annotation object service of a trial annotation object as an example, the server 105 may realize the following effects when running the annotation capability information determination application. The server 105 first receives an incoming to-be-annotated task from the terminal device 101 through the network 104, and then determines a trial annotation object (e.g., the user(s) corresponding to the terminal device(s) 102, 103 shown in Fig. 1) according to an annotation demand for the to-be-annotated task. Then, the server 105 determines trial annotation data according to the annotation demand and a preset trial annotation requirement. Next, the server 105 determines a trial annotation duration according to an attribute of the trial annotation object. Finally, the server 105 performs, by issuing the trial annotation data to the user(s) corresponding to the terminal device(s) 102, 103 through the network 104 for the user(s) to perform trial annotation operation, where the duration of the trial annotation operation is the trial annotation duration, and finally determines annotation capability information of a corresponding trial annotation object according to a received annotation result for the trial annotation data within the trial annotation duration, the annotation result being transmitted back by the terminal device(s) 102, 103.

It should be pointed out that, in addition to being acquired from the terminal device 101 through the network 104, the to-be-annotated task may be pre-stored locally in the server 105 in various ways. Therefore, when detecting that these data is already stored locally (e.g., starting to process a to-be-annotated task retained previously), the server 105 may choose to directly acquire these data locally. In this case, the exemplary system architecture 100 may alternatively not include the terminal device 101 and the network 104.

The method for determining annotation capability information provided in the subsequent embodiments of the present disclosure is generally performed by the server 105 having task assignment and arrangement capabilities, and correspondingly, the apparatus for determining annotation capability information is also generally provided in the server 105. However, it should also be pointed out that, when having task assignment and arrangement capabilities that satisfy the requirements, the terminal device(s) 101, 102, 103 may complete, through an annotation task processing application installed on the terminal device(s) 101, 102, 103, the above computations performed by the server 105, thereby finally obtaining the same result as that of the server 105. Correspondingly, the apparatus for determining annotation capability information may also be provided in the terminal device(s) 101, 102, 103. In this case, the exemplary system architecture 100 may not include the server 105 and the network 104.

It should be appreciated that the numbers of the terminal devices, the networks and the servers in Fig. 1 are merely illustrative. Any number of terminal devices, networks and servers may be provided based on actual requirements.

Referring to Fig. 2, Fig. 2 is a flowchart of a method for determining annotation capability information provided by an embodiment of the present disclosure. Here, a flow 200 includes the following steps:

Step 201, determining a trial annotation object according to an annotation demand for a to-be-annotated task.

This step is intended to determine, by an executing body (e.g., the server 105 shown in Fig. 1) of the method for determining annotation capability information, an annotation capability corresponding to the annotation demand according to the annotation demand for the to-be-annotated task, and then determine, according to the annotation capability, an appropriate annotation object as a trial annotation object for subsequent trial annotation.

Here, many kinds of annotation demands are included, which may be classified into a plurality of categories such as judging and cleaning, content transfer, content extraction, and enrichment. Each category may be subdivided into a plurality of subcategories according to specific data types. The data types include an image type, a voice type, a text type, a video type, and a webpage type. Taking the image plus the content extraction as an example, the annotation demand may be further subdivided into: selecting an image element using a box, attaching data to the image element, defining semantic of an image area, annotating a lane in the image, and the like. Meanwhile, in addition to the demand information such as an annotation target and an annotation mode, the annotation demand may further include a related demand for a capability level of the annotation object performing an annotation, for example, a requirement for a quantity of historical annotation behaviors in the aspect of selecting an image element using a box, a historical average annotation accuracy rate, and the like.

When an annotation object having all annotation capabilities corresponding to the annotation demand is not occupied, the annotation object may be directly used as the trial annotation object. When the annotation object having all the annotation capabilities corresponding to the annotation demand is occupied, an annotation object having a minimal difference from a demanded annotation capability may be appropriately selected to be used as the test object. Here, the minimal difference may be determined according to the difference between annotation capabilities in amount, or may be determined according to the difference between annotation capabilities in importance.

Step 202, determining trial annotation data, according to the annotation demand and a preset trial annotation requirement.

On the basis of step 201, this step 202 is intended to determine, by the above executing body, the trial annotation data according to the annotation demand and the preset trial annotation requirement. Here, the annotation demand is used to determine a relevant parameter of the to-be-annotated task, so as to select data consistent with or approximate to the to-be-annotated task as the trial annotation data according to the annotation demand. The preset trial annotation requirement is a requirement given in order to comprehensively cover the annotation capability corresponding to the annotation demand in the case of the annotation demand, the requirement including requirements in a plurality of dimensions for the trial annotation data, for example, a data type, a covered scenario type, a data amount, and a data complexity. The preset trial annotation requirement is combined with the annotation demand to enable the trial annotation data to assess the comprehensive annotation capability on the basis that the to-be-annotated task is favored.

Step 203, determining a trial annotation duration according to an attribute of the trial annotation object.

On the basis of step 202, this step 203 is intended to determine, by the above executing body, the trial annotation duration according to the attribute of the trial annotation object. Here, the attribute of the trial annotation object may include attribute information corresponding to the identity of the trial annotation object, for example, a gender, an age, a working age, and a working state, and may include historical annotation record information related to the to-be-annotated task, for example, amount of historical annotated data, proportions and distributions of data types in the historical annotated data, a historical average single annotation duration, a historical annotation accuracy rate, and a trend of the historical annotation accuracy rate changing with time.

Furthermore, in addition to being used as an influence factor to directly determine the trial annotation duration, the above attribute information may also be used as an influence factor to correct a basic duration for a trial annotation, such that the corrected duration is used as an actual trial annotation duration to match a current trial annotation object.

Step 204, determining annotation capability information of the trial annotation object according to an annotation result of the trial annotation object annotating the trial annotation data within the trial annotation duration.

On the basis of step 203, this step 204 is intended to determine, by the above executing body, information representing the annotation capability of the trial annotation object according to the annotation result of the trial annotation object annotating the trial annotation data within the trial annotation duration. The annotation capability information is used to indicate the annotation capability actually owned by the object to which the annotation capability information belongs, such that whether the trial annotation object can be used as the annotation object actually annotating the to-be-annotated task is determined based on the determined annotation capability.

When the annotation capability determined according to the annotation demand may be subdivided into a annotation capability category and a capability value parameter under each capability category, the trial annotation object may only be an annotation object having an annotation capability corresponding to the annotation capability category. Then, the annotation capability value of the trial annotation object under the annotation capability category is determined according to the annotation capability information determined in this step 203.

Here, each capability category may be represented as one independent capability tag, and the capability value parameter under the capability category may refer to a specific numerical value or information in another representation form that is recorded in the tag. For example, when the capability value of the each capability category is classified by levels, one corresponding color may be assigned to each level, to characterize the annotation capability level, under the annotation capability category, of the annotation object to which the capability tag belongs by displaying the capability tag of the corresponding color.

According to the method for determining annotation capability information provided in the embodiment of the present disclosure, on the basis that the trial annotation object is determined according to the annotation demand, the trial annotation data is determined in combination with the annotation demand and the preset trial annotation requirement, and at the same time, the trial annotation duration is reasonably determined according to the attribute of the trial annotation object, thereby balancing the annotation cost and the annotation quality. Thus, the accuracy of the annotation capability information is improved.

Further, after the annotation capability value of the trial annotation object under the annotation capability category is determined, a corresponding proportion of to-be-annotated tasks may further be assigned to the trial annotation object according to the annotation capability value of the trial annotation object. That is, the higher the annotation capability value possessed by the trial annotation object is, the larger the part of the to-be-annotated tasks assigned to the trial annotation object in the total quantity of to-be-annotated tasks is, which makes full use of the annotation object having the high annotation capability, thereby improving the overall annotation quality. More further, it is further possible to determine, before an annotation task is assigned to each trial annotation object, whether the annotation capability value of the trial annotation object is greater than a preset minimum value, and control a trial annotation object having only an actual annotation capability value exceeding the minimum value to actually participate in the annotation for the to-be-annotated task.

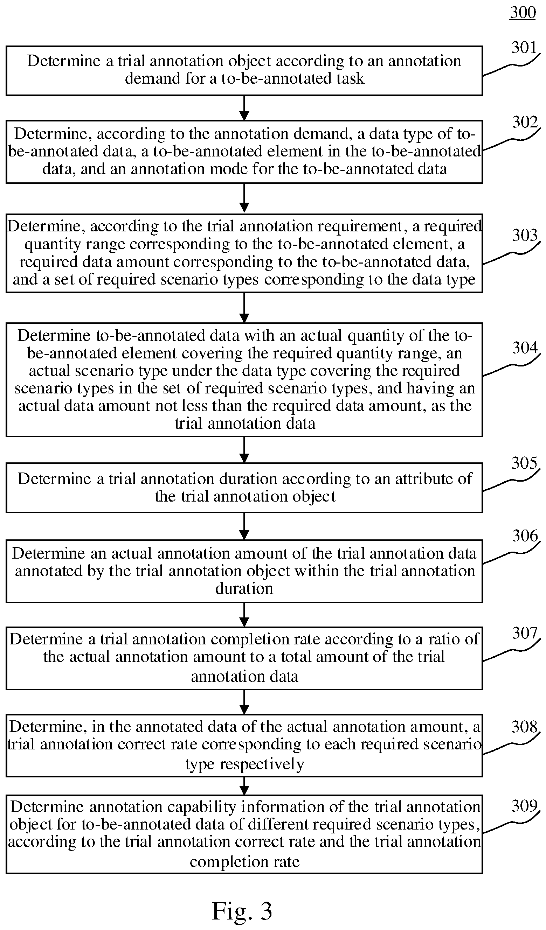

Referring to Fig. 3, Fig. 3 is a flowchart of a method for determining annotation capability information provided by another embodiment of the present disclosure. Here, a flow 300 includes the following steps:

Step 301, determining a trial annotation object according to an annotation demand for a to-be-annotated task.

Step 302, determining, according to the annotation demand, a data type of to-be-annotated data, a to-be-annotated element in the to-be-annotated data, and an annotation mode for the to-be-annotated data.

In this step, three parameters used to select trial annotation data are determined according to the annotation demand, which are the data type of the to-be-annotated data used as the trial annotation data, to-be-annotated element in the to-be-annotated data, and the annotation mode for the to-be-annotated data. The data type may include an image type, a voice type, a text type, a video type, a webpage type, and the like. Taking an image as an example, the to-be-annotated element in the image may include: a pedestrian, an obstacle, a static object, a running vehicle, a license plate, and the like. The annotation mode may include: selecting an element with a box, a coordinate annotation, a color discrimination, a semantic transfer, a text recognition, and the like.

Step 303, determining, according to the trial annotation requirement, a required quantity range corresponding to the to-be-annotated element, a required data amount corresponding to the to-be-annotated data, and a set of required scenario types corresponding to the data type.

On the basis of step 302, this step 303 is intended to determine, by the above executing body, three requirements corresponding to step 302 according to the trial annotation requirement, i.e., determine the required quantity range corresponding to the to-be-annotated element, the required data amount corresponding to the to-be-annotated data, and a set of the required scenario types corresponding to the data type. Here, taking annotating a pedestrian contained in an image as an example, the required quantity range may be [0,100), and the required scenario types included in the set of the required scenario types may refer to: an intersection scenario, a T-junction scenario, an east-west crossing scenario, a south-north crossing scenario, a bidirectional two-lane scenario, a bidirectional four-lane scenario, a daytime crossing scenario, an evening crossing scenario, a nighttime crossing scenario, etc. The required data amount may refer to that it may be required that the number of images as samples should be not less than 1000.

Step 304, determining to-be-annotated data with an actual quantity of the to-be-annotated element covering the required quantity range, an actual scenario type under the data type covering the required scenario types in the set of required scenario types, and having an actual data amount not less than the required data amount, as the trial annotation data.

On the basis of step 303, this step 304 is intended to determine, by the above executing body, determining to-be-annotated data with an actual quantity of the to-be-annotated element covering the required quantity range, an actual scenario type under the data type covering the required scenario types in the set of required scenario types, and having an actual data amount not less than the required data amount, as the trial annotation data. That is, the purpose of this step is to select to-be-annotated data having comprehensive types and an appropriate data amount as the trial annotation data, to fully, comprehensively and accurately determine the annotation capability of the trial annotation object.

Step 305, determining a trial annotation duration according to an attribute of the trial annotation object.

Step 306, determining an actual annotation amount of the trial annotation data annotated by the trial annotation object within the trial annotation duration.

Step 307, determining a trial annotation completion rate according to a ratio of the actual annotation amount to a total amount of the trial annotation data.

Since there is a situation where the trial annotation object does not complete the annotation for all trial annotation data assigned thereto within the trial annotation duration, steps 306-307 are intended to determine, by the above executing body, the trial annotation completion rate by determining the ratio of the actual annotation amount to the total amount of the trial annotation data. In the situation where the annotation for all the trial annotation data is not completed, the trial annotation completion rate is less than 100%.

Clearly, if the trial annotation object completes the annotation for all the trial annotation data in advance within the trial annotation duration, a trial annotation completion rate greater than 100% may alternatively be obtained according to the duration that the annotation is completed in advance.

Step 308, determining, in annotated data of the actual annotation amount, a trial annotation correct rate corresponding to each required scenario type respectively.

Step 309, determining annotation capability information of the trial annotation object for to-be-annotated data of different required scenario types, according to the trial annotation correct rate and the trial annotation completion rate.

Different from step 307 in which the trial annotation completion rate is determined from the amount of annotated data, steps 308-309 determine the trial annotation correct rate based on the annotation correct rate corresponding to each required scenario type respectively in the annotated data of the actual annotation amount, and finally determine, based on the trial annotation correct rate and the trial annotation completion rate, the information representing the annotation capabilities of the trial annotation object for the to-be-annotated data of the different required scenario types,.

Different from the embodiment shown in the flow 200, in this embodiment, an implementation in which the trial annotation data is determined is provided through steps 302-304. The trial annotation data is determined according to the data type, the to-be-annotated element, the annotation mode, the set of required scenario types, the required quantity range, the required data amount, thereby ensuring that the trial annotation data has a sufficient data amount, a comprehensive complexity coverage, and a comprehensive scenario type coverage. In addition, an implementation in which the annotation capability is determined is provided through steps 306-309. In combination with the trial annotation completion rate, the trial annotation correct rate and the different required scenario types, the information representing the annotation capability of the trial annotation object can be determined in detail from various aspects.

It should be understood that there may be no causal and dependency relationships between the implementation provided in steps 302-304 and the implementation provided in steps 306-309, that the two implementations may entirely form separate embodiments by replacing the corresponding upper-level implementation in the flow 200, and that this embodiment exists only as a preferred embodiment that simultaneously includes the two implementations.

On the basis of the embodiment shown in the flow 300, in order to further improve the accuracy of the determined annotation capability, it is further possible to determine whether there is an abnormal annotation efficiency that is too high or too low according to an annotation efficiency parameter during the trial annotation, such that an annotation capability matching the actual situation more may be assessed and obtained by removing the abnormal part.

An implementation includes, but not limited to:
determining actual annotation efficiencies of the trial annotation object annotating the trial annotation data within respective trial annotation time periods constituting the trial annotation duration;
determining an abnormal annotation efficiency in the actual annotation efficiencies; and
excluding annotated data corresponding to the abnormal annotation efficiency from calculation of the actual annotation amount and the annotation correct rate.

It is assumed that a normal annotation efficiency obtained through performing statistics on a large number of historical annotation records is 3-7/min (meaning that annotations for 3-7 target objects in an image are completed per minute). On a per minute basis, an annotation efficiency which is less than 0.5 per minute and greater than 10 per minute may be used as abnormal data to be excluded from the calculation.

Further, in order to avoid misjudgment, it is further possible to determine whether the low annotation efficiency is caused by the fluctuation of the network quality, by acquiring the network quality within a corresponding time period. It is further possible to determine whether the high annotation efficiency is caused by continuous images having high content repeatability, by acquiring a similarity of to-be-annotated images within the corresponding time periods. Clearly, other verification means may alternatively be used to reduce the misjudgment.

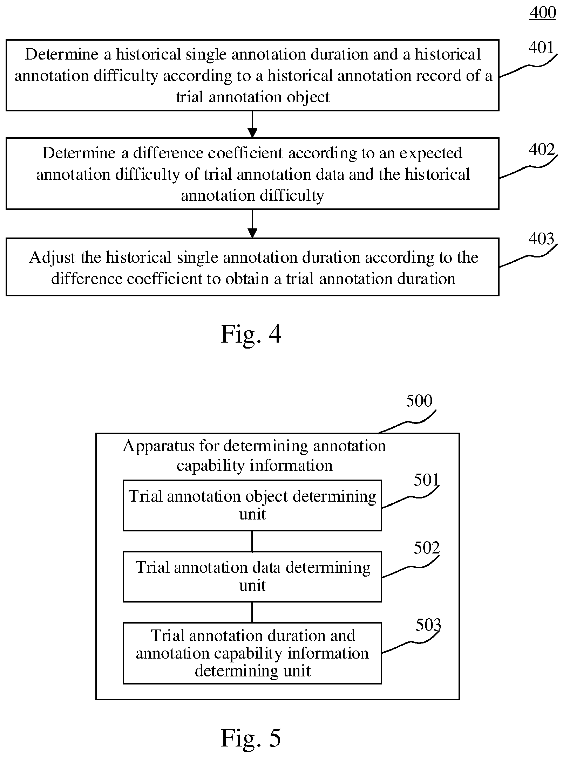

On the basis of any of the above embodiments, Fig. 4 provides a method for determining a trial annotation duration here according to an embodiment of the present disclosure, to use the method as a feasible example only, to verify the feasibility and reasonableness of the scheme. A person skilled in the art may adjust the scheme in different actual scenarios according to a guiding principle, to obtain different specific implementations. Here, the flow 400 includes the following steps:
Step 401, determining a historical single annotation duration and a historical annotation difficulty according to a historical annotation record of a trial annotation object.
Step 402, determining a difference coefficient according to an expected annotation difficulty of trial annotation data and the historical annotation difficulty.

The difference coefficient may be realized by quantifying the difference between the expected annotation difficulty and the historical annotation difficulty. Here, if the difference coefficient is positive, it indicates that the expected annotation difficulty is greater than the historical annotation difficulty, and if the difference coefficient is negative, it indicates that the expected annotation difficulty is less than the historical annotation difficulty.

Clearly, the difference coefficient may alternatively be realized by quantifying the quotient of the expected annotation difficulty and the historical annotation difficulty. Here, if the difference coefficient is greater than 1, it indicates that the expected annotation difficulty is greater than the historical annotation difficulty, and if the difference coefficient is greater than 0 and less than 1, it indicates that the expected annotation difficulty is less than the historical annotation difficulty.

Step 403, adjusting the historical single annotation duration according to the difference coefficient to obtain a trial annotation duration.

On the basis of step 402, if the difference coefficient indicates that the expected annotation difficulty is greater than the historical annotation difficulty, the historical single annotation duration is adjusted downward. If the difference coefficient indicates that the expected annotation difficulty is less than the historical annotation difficulty, the historical single annotation duration is adjusted upward.

An c adjustment may be:
in response to the difference coefficient being positive, using a product of the difference coefficient and the historical single annotation duration as the trial annotation duration; and
in response to the difference coefficient being negative, using an absolute value of a quotient of the historical single annotation duration and the difference coefficient as the trial annotation duration.

This embodiment is intended to adjust, by the above executing body, the historical single annotation duration according to the difference coefficient determined according to the historical annotation difficulty and the expected annotation difficulty, thus to obtain the trial annotation duration of which the duration matching the actual difficulty.

Further, if the finally determined trial annotation duration is long, it is further possible to reduce the trial annotation duration in proportion, in combination with the upper limit of the trial annotation duration allowed in the actual case.

Further referring to Fig. 5, as an implementation of the method shown in the above drawings, an embodiment of the present disclosure provides an apparatus for determining annotation capability information. The embodiment of the apparatus corresponds to the embodiment of the method shown in Fig. 2, and the apparatus may be applied in various electronic devices.

As shown in Fig. 5, the apparatus 500 for determining annotation capability information in this embodiment may include: a trial annotation object determining unit 501, a trial annotation data determining unit 502 and a trial annotation duration and annotation capability information determining unit 503. Here, the trial annotation object determining unit 501 is configured to determine a trial annotation object according to an annotation demand for a to-be-annotated task. The trial annotation data determining unit 502 is configured to determine trial annotation data according to the annotation demand and a preset trial annotation requirement. The trial annotation duration and annotation capability information determining unit 503 is configured to determine a trial annotation duration according to an attribute of the trial annotation object, and determine annotation capability information of the trial annotation object according to an annotation result of the trial annotation object annotating the trial annotation data within the trial annotation duration.

In this embodiment, for detailed processes of the trial annotation object determining unit 501, the trial annotation data determining unit 502 and the trial annotation duration and annotation capability information determining unit 503 in the apparatus 500 for determining annotation capability information, and their technical effects, reference may be respectively made to relative descriptions of steps 201-204 in the corresponding embodiment of Fig. 2, which will not be repeatedly described here.

In some alternative implementations of this embodiment, the trial annotation data determining unit 502 may be further configured to:
determine, according to the annotation demand, a data type of to-be-annotated data, a to-be-annotated element in the to-be-annotated data and an annotation mode;
determine, according to the trial annotation requirement, a required quantity range corresponding to the to-be-annotated element, a required data amount corresponding to the to-be-annotated data, and a set of required scenario types corresponding to the data type; and
determine to-be-annotated data with an actual quantity of the to-be-annotated element covering the required quantity range, an actual scenario type under the data type covering the required scenario types in the set of required scenario types, and having an actual data amount not less than the required data amount, as the trial annotation data.

In some alternative implementations of this embodiment, the trial annotation duration and annotation capability information determining unit 503 includes: an annotation capability information determining subunit, configured to determine the annotation capability information of the trial annotation object according to the annotation result of the trial annotation object annotating the trial annotation data within the trial annotation duration. The annotation capability information determining subunit may be further configured to:
determine an actual annotation amount of the trial annotation data annotated by the trial annotation object within the trial annotation duration;
determine a trial annotation completion rate according to a ratio of the actual annotation amount to a total amount of the trial annotation data;
determine, in annotated data of the actual annotation amount, a trial annotation correct rate corresponding to each required scenario type respectively; and
determine annotation capability information of the trial annotation object for to-be-annotated data of different required scenario types, according to the trial annotation correct rate and the trial annotation completion rate.

In some alternative implementations of this embodiment, the apparatus 500 for determining annotation capability information in this embodiment may further include:
an actual annotation efficiency determining unit, configured to determine actual annotation efficiencies of the trial annotation object annotating the trial annotation data within respective trial annotation time periods constituting the trial annotation duration;
an abnormal annotation efficiency determining unit, configured to determine an abnormal annotation efficiency in the actual annotation efficiencies; and
an abnormal data examining unit, configured to exclude annotated data corresponding to the abnormal annotation efficiency from calculation of the actual annotation amount and the annotation correct rate.

In some alternative implementations of this embodiment, the trial annotation duration and annotation capability information determining unit 503 includes: a trial annotation duration determining subunit, configured to determine the trial annotation duration according to the attribute of the trial annotation object. The trial annotation duration determining subunit may include:
a historical annotation parameter determining module, configured to determine a historical single annotation duration and a historical annotation difficulty according to a historical annotation record of the trial annotation object;
a difference coefficient determining module, configured to determine a difference coefficient according to an expected annotation difficulty of the trial annotation data and the historical annotation difficulty; and
a trial annotation duration determining module, configured to adjust the historical single annotation duration according to the difference coefficient to obtain the trial annotation duration.

In some alternative implementations of this embodiment, the trial annotation duration determining module may be further configured to:
in response to the difference coefficient being positive, use a product of the difference coefficient and the historical single annotation duration as the trial annotation duration, wherein the difference coefficient being positive indicates that the expected annotation difficulty is greater than the historical annotation difficulty; and
in response to the difference coefficient being negative, use an absolute value of a quotient of the historical single annotation duration and the difference coefficient as the trial annotation duration, wherein the difference coefficient being negative indicates that the expected annotation difficulty is less than the historical annotation difficulty.

In some alternative implementations of this embodiment, the trial annotation object determining unit may be further configured to:
determine a demanded annotation capability category according to the annotation demand for the to-be-annotated task; and
determine an annotation object having an annotation capability corresponding to the annotation capability category as the trial annotation object.

Correspondingly, the trial annotation duration and annotation capability information determining unit includes the annotation capability information determining subunit determining the annotation capability information of the trial annotation object, and the annotation capability information determining subunit is further configured to:
determine an annotation capability value of the trial annotation object under the annotation capability category.

In some alternative implementations of this embodiment, the apparatus 500 for determining annotation capability information in this embodiment may further include:
a to-be-annotated task assigning unit, configured to assign, after the annotation capability value of the trial annotation object under the annotation capability category is determined, a corresponding proportion of to-be-annotated tasks to the trial annotation object according to the annotation capability value of the trial annotation object.

This embodiment exists as an apparatus embodiment corresponding to the above method embodiment. According to the apparatus for determining annotation capability information provided in this embodiment, on the basis that the trial annotation object is determined according to the annotation demand, the trial annotation data is determined based on the annotation demand and the preset trial annotation requirement, and at the same time, the trial annotation duration is reasonably determined according to the attribute of the trial annotation object, thereby balancing the annotation cost and the annotation quality. Thus, the accuracy of the annotation capability information is improved.

According to an embodiment of the present disclosure, an electronic device is provided. The electronic device includes: at least one processor; and a storage device, communicated with the at least one processor. Here, the storage device stores instructions thereon, and the instructions, when executed by a processor, cause the processor to implement the method for determining annotation capability information described in any of the above embodiments.

According to an embodiment of the present disclosure, a non-transitory computer readable storage medium storing a computer program thereon is provided. Here the computer program, when executed by a processor, causes the processor to perform the method for determining annotation capability information described in any of the above embodiments.

According to an embodiment of the present disclosure, a computer program product is provided. The computer program, when executed by a processor, cause the processor to implement the method for determining annotation capability information described in any of the above embodiments.

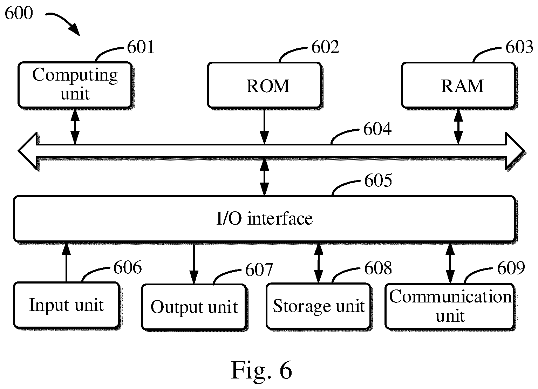

Fig. 6 is a schematic block diagram of an exemplary electronic device 600 that may be used to implement the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may alternatively represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the device 600 may include a computing unit 601, which may execute various appropriate actions and processes in accordance with a computer program stored in a read-only memory (ROM) 602 or a computer program loaded into a random-access memory (RAM) 603 from a storage unit 608. The RAM 603 may alternatively store various programs and data required by operations of the device 600. The computing unit 601, the ROM 602 and the RAM 603 are connected to each other through a bus 604. An input/output (I/O) interface 605 is also connected to the bus 604.

Multiple components of the device 600 are connected to the I/O interface 605, and include: an input unit 606, such as a keyboard and a mouse; an output unit 607, such as various types of displays and a speaker; a storage unit 608, such as a magnetic disk and an optical disk; and a communication unit 609, such as a network card, a modem and a wireless communication transceiver. The communication unit 609 allows the device 600 to exchange information or data with other devices through a computer network, such as the Internet and/or various telecommunications networks.

The computing unit 601 may be various general-purpose and/or specific-purpose processing components having processing and computing capabilities. Some examples of the computing unit 601 include, but are not limited to, a central processing unit (CPU), a graphics processing unit (GPU), various specific artificial intelligence (AI) computing chips, various computing units running machine learning model algorithms, a digital signal processor (DSP), and any appropriate processor, controller, microcontroller and the like. The computing unit 601 performs various methods and processing described above, such as the method for determining annotation capability information. For example, in some embodiments, the method for determining annotation capability information may be implemented as a computer software program, which is tangibly included in a machine-readable medium, such as the storage unit 608. In some embodiments, part or all of the computer program may be loaded and/or installed on the device 600 through the ROM 602 and/or the communication unit 609. When the computer program is loaded into the RAM 603 and executed by the computing unit 601, one or more steps of the method for determining annotation capability information described above may be performed. Alternatively, in other embodiments, the computing unit 601 may be configured to perform the method for determining annotation capability information in any other appropriate manner (such as through firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of the disclosure may be written in any combination of one or more programming languages. These program codes may be provided to a processor or controller of a general-purpose computer, specific-purpose computer or other programmable apparatus for determining annotation capability information, so that the program codes, when executed by the processor or controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, also known as cloud computing server or virtual host. Cloud server is a host product in the cloud computing service system to solve the defects of difficult management and weak business scalability in the traditional physical host and virtual private server (VPS) services.

According to the technical solution in embodiments of the present disclosure, on the basis that a trial annotation object is determined according to an annotation demand, trial annotation data is determined according to the annotation demand and a preset trial annotation requirement, and at the same time, a trial annotation duration is reasonably determined according to an attribute of the trial annotation object, thereby balancing the annotation cost and the annotation quality. Thus, the accuracy of annotation capability information is improved.

It should be appreciated that the steps of reordering, adding or deleting may be executed using the various forms shown above. For example, the steps described in embodiments of the disclosure may be executed in parallel or sequentially or in a different order, so long as the expected results of the technical solutions provided in embodiments of the disclosure may be realized, and no limitation is imposed herein.

The above specific implementations are not intended to limit the scope of the disclosure. It should be appreciated by those skilled in the art that various modifications, combinations, sub-combinations, and substitutions may be made depending on design requirements and other factors. Any modification, equivalent and modification that fall within the spirit and principles of the disclosure are intended to be included within the scope of the disclosure.

## Claims

1. A method for determining annotation capability information, comprising:
determining (201, 301) a trial annotation object according to an annotation demand for a to-be-annotated task;
determining (202) trial annotation data, according to the annotation demand and a preset trial annotation requirement; and
determining (203) a trial annotation duration according to an attribute of the trial annotation object, and determining (204) annotation capability information of the trial annotation object according to an annotation result of the trial annotation object annotating the trial annotation data within the trial annotation duration.

2. The method according to claim 1, wherein determining (202) the trial annotation data, according to the annotation demand and the preset trial annotation requirement, comprises:
determining (302), according to the annotation demand, a data type of to-be-annotated data, a to-be-annotated element in the to-be-annotated data, and an annotation mode for the to-be-annotated data;
determining (303), according to the preset trial annotation requirement, a required quantity range corresponding to the to-be-annotated element, a required data amount corresponding to the to-be-annotated data, and a set of required scenario types corresponding to the data type; and
determining (304) to-be-annotated data with an actual quantity of the to-be-annotated element covering the required quantity range, an actual scenario type under the data type covering the required scenario types in the set of required scenario types, and having an actual data amount not less than the required data amount, as the trial annotation data.

3. The method according to claim 2, wherein determining (204) the annotation capability information of the trial annotation object according to the annotation result of the trial annotation object annotating the trial annotation data within the trial annotation duration comprises:
determining (306) an actual annotation amount of the trial annotation data annotated by the trial annotation object within the trial annotation duration;
determining (307) a trial annotation completion rate according to a ratio of the actual annotation amount to a total amount of the trial annotation data;
determining (308), in annotated data of the actual annotation amount, a trial annotation correct rate corresponding to each required scenario type respectively; and
determining (309) annotation capability information of the trial annotation object for to-be-annotated data of different required scenario types, according to the trial annotation correct rate and the trial annotation completion rate.

4. The method according to claim 3, further comprising:
determining actual annotation efficiencies of the trial annotation object annotating the trial annotation data within respective trial annotation time periods constituting the trial annotation duration;
determining an abnormal annotation efficiency in the actual annotation efficiencies; and
excluding annotated data corresponding to the abnormal annotation efficiency from calculation of the actual annotation amount and the trial annotation correct rate.

5. The method according to claim 1, wherein determining (202) the trial annotation duration according to the attribute of the trial annotation object comprises:
determining (401) a historical single annotation duration and a historical annotation difficulty according to a historical annotation record of the trial annotation object;
determining (402) a difference coefficient according to an expected annotation difficulty of the trial annotation data and the historical annotation difficulty; and
adjusting (403) the historical single annotation duration according to the difference coefficient to obtain the trial annotation duration.

6. The method according to claim 5, wherein adjusting (403) the historical single annotation duration according to the difference coefficient to obtain the trial annotation duration comprises:
in response to the difference coefficient being positive, using a product of the difference coefficient and the historical single annotation duration as the trial annotation duration, wherein the difference coefficient being positive indicates that the expected annotation difficulty is greater than the historical annotation difficulty; and
in response to the difference coefficient being negative, using an absolute value of a quotient of the historical single annotation duration and the difference coefficient as the trial annotation duration, wherein the difference coefficient being negative indicates that the expected annotation difficulty is less than the historical annotation difficulty.

7. The method according to any one of claims 1-6, wherein determining (201) the trial annotation object according to the annotation demand for the to-be-annotated task comprises:
determining a demanded annotation capability category according to the annotation demand for the to-be-annotated task; and
determining an annotation object having an annotation capability corresponding to the demanded annotation capability category as the trial annotation object,
wherein determining the annotation capability information of the trial annotation object correspondingly comprises:
determining an annotation capability value of the trial annotation object under the demanded annotation capability category.

8. The method according to claim 7, wherein after determining the annotation capability value of the trial annotation object under the demanded annotation capability category, the method further comprises:
assigning a corresponding proportion of to-be-annotated tasks to the trial annotation object according to the demanded annotation capability value of the trial annotation object.

9. An apparatus for determining annotation capability information, the apparatus comprising means for carrying out the method according to any one of claims 1-8.

10. A non-transitory computer readable storage medium storing a computer program thereon, wherein the computer program, when executed by a processor, causes the processor to perform the method for determining annotation capability information according to any one of claims 1-8.

11. A computer program product, comprising a computer program, wherein the computer program, when executed by a processor, cause the processor to implement the method for determining annotation capability information according to any one of claims 1-8.
